# EUROPÄISCHE PATENTSCHRIFT

(11) **EP 1 011 908 B1**
(45) Veröffentlichungstag und Bekanntmachung des Hinweises auf die Patenterteilung: **30.01.2002**
(21) Anmeldenummer: 98951371.8
(22) Anmeldetag: 09.09.1998
(51) Int. Cl.: B23D 65/02

(54) **VORRICHTUNG ZUR HERSTELLUNG VON BANDSÄGEBLÄTTERN**
DEVICE FOR PRODUCING BAND SAW BLADES
DISPOSITIF DE FABRICATION DE LAMES DE SCIE A RUBAN

(30) Priorität: 09.09.1997 DE 19739605
(43) Veröffentlichungstag der Anmeldung: 28.06.2000
(73) Patentinhaber: Haas, Hans Robert, 42853 Remscheid (DE)
(72) Erfinder: Haas, Hans Robert, 42853 Remscheid (DE)
(74) Vertreter: Füssel, Michael
(86) Internationale Anmeldenummer: EP9805740
(87) Internationale Veröffentlichungsnummer: WO9912687

(56) Entgegenhaltungen:
- WO-A-94/09936
- GB-A- 2 134 443
- US-A- 3 540 317

## Beschreibung

Die vorliegende Erfindung betrifft eine Vorrichtung nach Oberbegriff von Anspruch 1.

Derartige Vorrichtungen dienen zur Herstellung von Bandsägeblättern. Hierzu werden Ausnehmungen seitlich aus dem Bandmaterial herausgestanzt. Auf diese Weise entstehen im Bandmaterial die angeschärften Zähne, welche anschließend nur noch geschränkt werden müssen.

Für die Erfindung kommt es wesentlich auf die Herstellung hochpräziser Ausnehmungen mit scharfen Kanten an, wie dies für Sägezähne erforderlich ist. Die angeschärften Sägezähne sollen in einem Arbeitsschritt allein durch Ausstanzen entstehen. Deshalb sollen im Rahmen der vorliegenden Erfindung lediglich diejenigen Vorrichtungen betrachtet werden, bei denen das Bandmaterial zum Herstellen der Ausnehmungen stillsteht. Diese Stillstandszeiten werden als Vortriebsruhezeiten bezeichnet. Das Band wird deshalb stationär gehalten, während die Ausnehmungen angebracht werden. Es erfolgt während der Vortriebsruhezeiten keine Relativbewegung zwischen dem Stanzstempel der Stanzmatrize und dem Bandmaterial in Bandlängsrichtung. Dies ist die Voraussetzung für möglichst winkelgenaue und winkelkonstante Zahnkanten bzw. Kanten der Ausnehmungen.

Unter diesen Voraussetzungen ist aus der nicht vorveröffentlichten DE 196 14 537 eine Vorrichtung zur Herstellung von Sägezähnen an Bandmaterial bekannt, mit welcher die Ausnehmungen einzeln aus dem Bandmaterial herausgestanzt werden. Durch das einzelne Ausstanzen jedes Zahnes wird erreicht, daß jede einzelne Zahnspitze durch den nachfolgenden Stanzschritt angeschärft wird, weil der Stanzstempel die in Förderrichtung des Bandmaterials hinten liegende Zahnflanke des zuvor ausgestanzten Zahnes unter spitzem Winkel quer durchkreuzt.

Aufgabe der vorliegenden Erfindung ist es, die bekannte Vorrichtung so weiterzubilden, daß die Geschwindigkeit bei der Herstellung der Ausnehmungen unter Beibehaltung der präzisen geometrischen Verhältnisse vervielfacht werden kann.

Diese Aufgabe löst die Erfindung mit den Merkmalen des Hauptanspruchs.

Aus der Erfindung ergibt sich der Vorteil, daß eine Vervielfachung der Zahnherstellungsgeschwindigkeit für Bandsägeblätter möglich wird, ohne daß die angestrebte Zahnspitzenschärfe, die sich allein durch Ausstanzen der Zähne ergibt, beeinträchtigt wird.

Gleichwohl läßt sich die Erfindung auch allgemein zur Herstellung von Ausnehmungen aus Bandmaterial verwenden. Eine Beschränkung der Erfindung auf die Herstellung von Sägezähnen ist daher nicht erforderlich.

Basis der Erfindung ist ein Wechsel der Schrittlängen der einzelnen Vortriebsschritte. Auf eine vorbestimmte Anzahl von Einzelschritten folgt ein sogenannter Überholschritt.

Die notwendige Anzahl der Einzelschritte ergibt sich aus dem Abstand, welchen die Stanzstempel voneinander einnehmen.

Da dieser sogenannte Stanzstempelabstand durch die Ausführung der Einzelschritte überwunden werden muß, wobei z.B. jeder der Einzelschritte die Schrittlänge der Teilung hat, werden in diesem Fall hierzu n-1 Vortriebsschritte benötigt. Allgemein wird durch die kleinen Vortriebsschritte das noch nicht gestanzte Bandmaterial zwischen den Stanzstempeln schrittweise mit Ausnehmungen aufgefüllt.

Zugleich jedoch wird der in Bandförderrichtung hinten liegende Stanzstempel eine identische Anzahl von Einzelschritten ausführen und dabei jeweils einen Sägezahn/eine Ausnehmung herausstanzen.

Nachdem der in Bandförderrichtung vorn liegende Stanzstempel dort angekommen ist, wo er beim nächsten Einzelschritt in einen bereits von dem in Bandförderrichtung hinten liegenden Stanzstempel herausgestanzten Zahn einfallen würde, muß der Überholschritt einsetzen.

Der Überholschritt hat die Schrittlänge des Stanzstempelabstands plus einmal die Schrittlänge der Teilung. In dem Überholschritt wird das Bandmaterial soweit vorangefördert, daß von dem in Bandförderrichtung vorn liegende Stanzstempel nach hinten gesehen nur noch neues, noch nicht gestanztes Bandmaterial folgt. Gleichzeitig wird auch der in Bandförderrichtung hinten liegende Stanzstempel an vorgegebener Stelle am Bandmaterial angesetzt. Es erfolgt dann die Bearbeitung eines neuen Abschnitts des Bandmaterials, nachdem der Überholschritt ausgeführt worden ist. Der gesamte Abschnitt wird jedoch an jeweils zwei Stellen gleichzeitig bearbeitet.

Hierzu wird in einer vorbestimmten Anzahl von Einzelschritten der zwischen den Stanzstempeln befindliche Bereich des Bandmaterials durch den in Bandförderrichtung vorn liegenden Stanzstempel und den Förderweg des Bandes mit jeweils einer Schrittlänge der Teilung gestanzt. Zugleich wird jedoch auch der in Bandförderrichtung hinten liegende Stempel eine identische Anzahl von Ausnehmungen herstellen, worauf wieder ein Überholschritt erfolgen muß.

Mit der Erfindung läßt sich folglich die Stanzgeschwindigkeit zur Herstellung der Ausnehmungen ohne Veränderung der Hubzahl pro Sekunde vervielfachen. Die Höhe der Vervielfachung hängt letztlich ab von der Anzahl der verwendeten Stempel. Die Stanzstempel können einstückig zusammenhängen.

Eine Weiterbildung sieht zwei Stanzstempel vor, bei denen der Stanzstempelabstand das Zweifache der Teilung ist.

Bei dieser Weiterbildung der Erfindung erfolgt wechselweise ein kurzer Vortriebsschritt, ein langer Vortriebsschritt (Überholschritt), ein kurzer Vortriebsschritt usw..

Die Schrittfolge ist daher abwechselnd kurz - lang - kurz - lang usw.. Durch geeignete Auswahl des Stanzstempelabstands und die kurze bzw. lange Schrittlänge können so auf einfache Weise Sägen mit Räumzähnen hergestellt werden. Die Räumzähne liegen mit ihren Zahnspitzen zurückverlegt, die Schneidzähne liegen auf der Außenkante des Bandmaterials.

Da bei dieser Weiterbildung periodisch praktisch abwechselnd die gleichen kinematischen Verhältnisse vorliegen, sind hiermit sehr hohe Hubzahlen von > 600 pro Minute möglich.

Die dynamischen Schwingungen des Systems bleiben innerhalb engster Grenzen.

Von besonderer Bedeutung ist die Erfindung für die Herstellung von Sägezähnen. Diese werden seitlich aus einem Bandsägenblatt herausgestanzt. Hier kommt es insbesondere exakt darauf an, die Zahnspitzen scharf zu stanzen. Aus diesem Grunde ging man bisher davon aus, daß jeder Zahn für sich gestanzt werden muß.

Ein Stanzwerkzeug zur unmittelbaren Herstellung zweier benachbarter Zähne in einem Stanzschritt kann diese Anforderung nicht erfüllen. Der zwischen den Stanzstempeln liegende Zahn würde nicht die erforderliche Zahnschärfe erhalten. Dies liegt daran, daß der Zwischenraum zwischen den Zahnstempeln technisch gesehen stets eine Ausrundung hätte. Die sich hieraus ergebende Zahnform würde dieser Ausrundung folgen. Dies könnte allenfalls durch anschließendes Schleifen beseitigt werden.

Zwar wird durch die Erfindung das bisherige Herstellverfahren, wonach die Zähne einzeln aus dem Bandmaterial herausgestanzt werden müssen, nicht verlassen. Dennoch läßt sich durch die Erfindung eine erhebliche Steigerung der Effektivität herbeiführen. Zumindest ist eine Verdopplung bei unveränderter Hubzahl des bisherigen bekannten Verfahrens möglich.

Dieser Vorteil wird durch die zwei Stanzstempel erzielt, welche einen Abstand voneinander einnehmen, der ein Vielfaches z.B. das Zweifache oder - in besonderer Ausführung - ein mehr als das Zweifache der Teilung ist.

Damit bleiben die angestrebten Zahnspitzengeometrien bisheriger Sägezähne erhalten, während zugleich die Herstellgeschwindigkeit verdoppelt oder noch weiter vervielfacht wird.

Die Verwendung lediglich zweier Stanzstempel bietet allerdings den zusätzlichen Vorteil, daß Fehlabstände und Einstelltoleranzen benachbarter Stanzstempel praktisch vermeidbar sind. Toleranzen wie bei der Verwendung von mehr als zwei Stanzstempeln treten nicht auf.

Eine Weiterbildung der Erfindung sieht vor, Stanzstempel und Bandmaterial relativ zueinander quer bzw. senkrecht zu den Längskanten des Bandmaterials verfahrbar zu machen.

Im Hinblick auf die Herstellung von Bandsägen lassen sich unterschiedliche Zahnkonfigurationen damit erzielen.

Sollen dann die Zahnspitzen auf einer einzigen Zahnspitzenlinie liegen, muß zusätzlich zu den unterschiedlichen Querpositionen auch der jeweilige Vortriebsschritt variiert werden.

Will man hingegen die Zahnspitzen auf voneinander unabhängige Zahnspitzenlinien legen, bedarf es nicht unbedingt einer Anpassung der Schrittlänge der Vortriebsschritte an die unterschiedlichen Querpositionen zwischen den Stanzstempeln und dem Bandmaterial. Bei konstanter Querposition kann durch unterschiedliche Schrittlängen ebenfalls erreicht werden, daß die Zahnspitzen auf unterschiedlichen Zahnspitzenlinien liegen. Ist z.B. ein Vortriebsschritt kürzer als ein Zahnabstand, wird die Spitze des soeben hergestellten vorauslaufenden Zahnes gekappt.

Im Hinblick auf die Verwendung von Stanzstempeln, die voneinander den Abstand des Zweifachen der Teilung haben, ist von besonderer Bedeutung, daß zwischen zwei Querpositionen und zwischen einem langen und einem kurzen Vortriebsschritt jeweils gewechselt werden kann.

Dabei entspricht der lange Vortriebsschritt dem Überholschritt, mit welchem zwei Zahnausnehmungen übersprungen werden. Mit dem kurzen Vortriebsschritt wird bei nach außen verlagerter Querposition die zwischen zwei tiefen Zahnausnehmungen liegende Bandstelle so angefahren, daß rechts und links des Stanzstempels zwei neue scharfe Zahnspitzen entstehen, die zugehörige Tiefe der Zahnausnehmung jedoch geringer ist.

Im folgenden wird die Erfindung anhand von Ausführungsbeispielen näher erläutert. Es zeigen:
- Fig.1: ein Ausführungsbeispiel der Erfindung in Ansicht von vorn,
- Fig.2: ein Ausführungsbeispiel der Erfindung aus Sicht II-II gemäß Fig.1,
- Fig.3a: ein Ausführungsbeispiel der Erfindung in allgemeiner Form,
- Fig.3b: ein Ausführungsbeispiel der Erfindung mit Stanzstempelabstand gleich zweimal Teilung,
- Fig.4a bis 4e: eine Folge aus Arbeitszyklen mit Darstellung des Wechsels zwischen Vortriebsschritt gleich Schrittlänge der Teilung und Überholschritt,
- Fig.5: ein Ausführungsbeispiel für Vortriebsschritte unterschiedlicher Länge für unterschiedliche Querpositionen, und
- Fig.6: ein Ausführungsbeispiel für Vortriebsschritte konstanter Länge bei unterschiedlichen Querpositionen.

Sofern im folgenden nichts anderes gesagt wird, gilt die folgende Beschreibung stets für alle Figuren.

Die Figuren zeigen eine Stanzmaschine 100 zum Herausstanzen von Ausnehmungen mit vorbestimmten und jeweils gleichgroßen Abständen voneinander aus einem metallischen Bandmaterial 2. Die Abstände, welche die Ausnehmungen voneinander einnehmen, werden als Teilung 45 bezeichnet. Die Abstände wiederholen sich regelmäßig.

Wesentlich ist, daß das metallische Bandmaterial mittels einer Bandfördereinrichtung 9 diskontinuierlich in Vortriebsschritten vorgegebener Länge gefördert wird. Die Vortriebsschritte haben eine Länge, die von der Teilung 45 abhängig ist. Zwischen den Vortriebsschritten liegen jeweils sogenannte Vortriebsruhezeiten.

Hierzu wird das Bandmaterial 2 von einer Abwickelspule 3 abgezogen, unter einer Stanzmatrize 14 hindurch geführt und auf eine Aufwickelspule 4 aufgewickelt. Die Abwickelspule 3 ist hier über einen elektronisch gesteuerten Abwickelantrieb 5 in Abwickelrichtung angetrieben.

Die Aufwickelspule 4 wird hier über einen ebenfalls elektronisch geregelten Aufwickelantrieb 6 angetrieben. Abwickelantrieb 5 und Aufwickelantrieb 6 sind so eingestellt, daß zwischen der Abwickelspule 3 und der Stanzmatrize 14 eine vorauslaufende Verschlappungszone 7 und zwischen der Stanzmatrize 14 und der Aufwickelspule 4 eine nachlaufende Verschlappungszone 8 entsteht. Die Bandfördereinrichtung 9 weist ein eingangsseitiges Förderrollenpaar 10 und ein ausgangsseitiges Förderrollenpaar 11 auf. Die Förderrollenpaare 10 und 11 sind über Zugmittelantriebe 12 und 13 mit dem Bandfördermotor 22 gekoppelt, welcher ebenfalls elektronisch gesteuert ist.

Um bei dieser Vorrichtung Vortriebsschritte vorgegebener Länge zu realisieren, ist eine Bandwegmeßeinrichtung 15 vorgesehen, welche mit einem Meßrad 16 auf der unteren Breitseite 17 des Bandmaterials 2 anliegt. Zur Verhinderung eines Schlupfes zwischen Meßrad 16 und Bandmaterial 2 dient eine dem Meßrad 16 gegenüberliegende Anpreßrolle 19, welche auf der gegenüberliegenden Breitseite 18 anliegt. Von dem Meßrad 16 geht eine Wegsignalleitung 20 aus, welche einer Steuereinrichtung 21 zugeführt wird.

Auf diese Weise kann das geförderte Bandmaterial jeweils um vorbestimmte Schrittlängen vorwärts gefördert werden. Zum Abgreifen des tatsächlich zurück gelegten Weges dient das Meßrad 16. Da das Bandmaterial zwischen eingangsseitigem Förderrollenpaar 10 und ausgangsseitigem Förderrollenpaar 11 straff gehalten wird, sind Fehler ausgeschlossen.

Bei dem Bandfördermotor 22 handelt es sich um einen Servomotor, der über einen Servoverstärker 23 angesteuert wird.

Zwischen den Vortriebsschritten liegt wie gesagt jeweils eine Vortriebsruhezeit. In den Vortriebsruhezeiten, und ausschließlich in diesen, wenn in Bandlängsrichtung keine Relativbewegung zwischen Stanzstempeln und Band erfolgt, werden mittels Stanzstempel 27a bzw. 27b die Ausnehmungen in das Bandmaterial eingebracht.

Zu diesem Zweck sitzen die Stanzstempel 27a und 27b an einem gemeinsamen Zahnschlitten 24, der senkrecht zu dem Bandmaterial 2 derart getaktet angetrieben ist, daß in den Vortriebsruhezeiten die Stanzstempel 27a,27b mit ihren Stanzenden in das darunter liegende Bandmaterial 2 eintauchen.

Hierzu ist der Zahnschlitten 24 über eine vertikale Wälzlagerführung 26 im Maschinengehäuse 25 verschieblich gelagert. Zur Auf- und Abbewegung dient ein Zahnschlittenexenter 29, der über einen elektronisch angesteuerten Stanzmotor 30 immer dann für eine Umdrehung in Bewegung gesetzt wird, wenn der Bandfördermotor still steht. Dies erfolgt nach einer bestimmten Gesetzmäßigkeit, auf die noch eingegangen wird.

In jedem Fall liegt dieser Gesetzmäßigkeit ein getakteter Antrieb der Stanzmatrize zugrunde, der immer dann einsetzt, wenn das Bandmaterial nicht voran gefördert wird.

Ferner sind noch von Bedeutung ein mit dem Zahnschlittenexenter 29 verbundener Geber 31 und ein ortsfester Nehmer 32, der von dem Geber 31 initialisiert wird. Das Signal des Nehmers 32 wird der Steuereinrichtung 21 aufgegeben und dient der Koordination zwischen den aufeinander folgenden Bandförderschritten und den Hubbewegungen 58 des Zahnschlittens 24.

Um die prinzipielle Querposition zwischen dem Bandmaterial und dem Zahnschlitten vorzugeben, dient eine Basisplatte 33, die über ein Verstellrad 39 quer zum Zahnschlitten 24 verstellt werden kann.

Auf der Basisplatte 33 sitzt ein Bandrückenanschlag 34, gebildet durch zwei ortsfeste Wälzlager. An den Außenringen der Wälzlager 35,36 liegt das Bandmaterial 2 mit der glatten Rückenseite an, während die gegenüberliegende Parallelkante mit den Zähnen versehen wird.

Es ist auch ein wesentliches Merkmal dieser Erfindung, daß das Bandmaterial 2 mit dem gerad verlaufenden Bandrücken am Bandrückenanschlag 34 geführt wird. Dies ermöglicht eine präzise Einhaltung der Zahnspitzenlinie im Bereich von 1/500ste1 Millimeter und weniger, weil die gerad verlaufende Außenkante des Bandmaterials 2 ständig und ununterbrochen an dem Bandrückenanschlag 34 geführt wird.

Um dies zu gewährleisten, sind die eingangsseitigen und ausgangsseitigen Förderrollenpaare 10 bzw. 11 um einen bestimmten Neigungswinkel 44 zur Längsmittellinie des Bandmaterials 2 so geneigt, daß sich außer der Förderkraft 47 auch eine in Richtung zum Bandrückenanschlag weisende Anpreßkraft 48 ergibt.

Zur genauen Einstellung der Querposition zwischen den Stanzstempeln 27a,27b und dem Bandmaterial 2 dient ein Verstellrad 39, welches über eine Verstellspindel 38 eine Bewegung der Basisplatte 33 in Verstellrichtung 37 ermöglicht. Zu diesem Zweck ist die Verstellspindel 38 in einer Spindellagerung 40 ortsfest gelagert und greift mit ihrem Spindelgewinde 41 in ein Gegengewinde der Basisplatte 33 ein.

Seitlich ist die Basisplatte 33 an einer Längsführung 42 parallel geführt. Über die jeweilige Drehstellung der Verstellspindel 38 ergibt sich somit die Grundposition der Basisplatte 33.

Wesentlich ist nun, daß zwei Stanzstempel 27a,27b vorgesehen sind, welche parallel zu den Längskanten des Bandmaterials 2 liegen und welche voneinander den Abstand eines hier: ganzzahligen Vielfachen der Teilung haben.

Dieser Abstand wird als Stanzstempelabstand 49 bezeichnet. Beide Stanzstempel 27a,27b haben identisches Profil.

Um mit einer derartigen Konfiguration die Ausnehmungen aus dem Bandmaterial herzustellen, ist die Bandfördereinrichtung 9 derart gesteuert, daß nach einer vorbestimmten Anzahl von kleinen Vortriebsschritten 56 mit der jeweiligen Schrittlänge der Teilung ein Überholschritt 57 ausgeführt wird, dessen Schrittlänge gleich ist einem vorbestimmten anderen Vielfachen der Teilung. Hierzu ist maßgeblich der Stanzstempelabstand. Bezeichnet man den Abstand der Stanzstempel 27a,27b als ein n-faches der Teilung, so muß die Bandfördereinrichtung 9 zunächst n-1 Vortriebsschritte ausführen, jeden der Vortriebsschritte mit der Schrittlänge der Teilung. Damit wird der zwischen den Stanzstempeln liegende Bandbereich schrittweise mit Ausnehmungen aufgefüllt. Anschließend erfolgt der Überholschritt.

Der Überholschritt hat dann eine Schrittlänge, die gleich ist dem (n+1)-fachen der Teilung.

Es erfolgt daher ein stetiger Wechsel zwischen einer vorbestimmten Anzahl kurzer Vortriebsschritte mit einem einzigen Überholschritt großer Schrittlänge. Hierauf wird noch eingegangen.

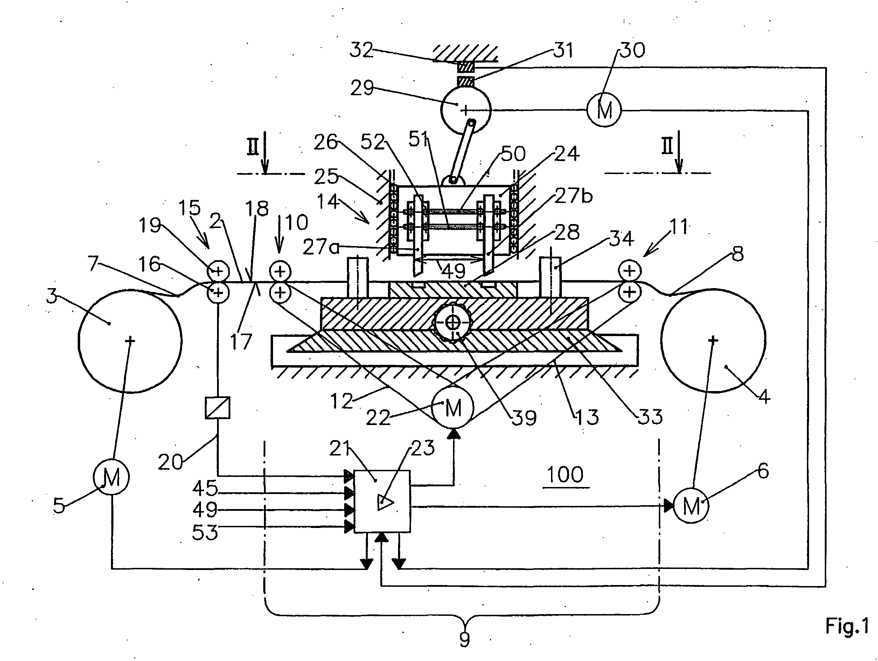

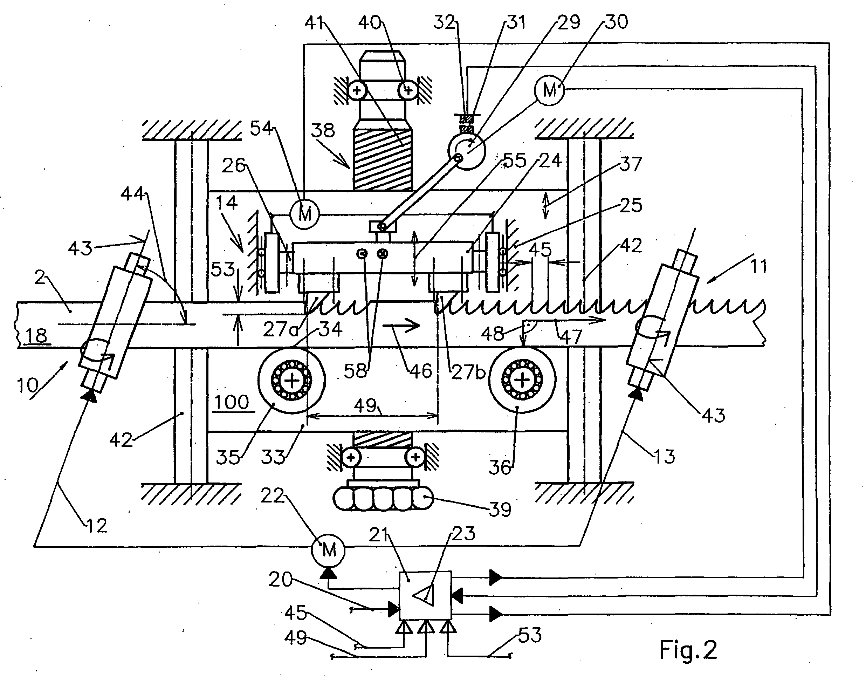

Wie ferner die Fig.1 und 2 zeigen, muß die jeweilige Teilung 45 auch der Steuereinrichtung 21 als Sollwert aufgeprägt werden.

Ferner ist es erforderlich, den sogenannten Stanzstempelabstand 49 der Steuereinrichtung 21 aufzugeben, damit hieraus die einzelnen kurzen Vortriebsschritte generiert werden können.

Darüber hinaus ist vorgesehen, der Steuereinrichtung 21 einen weiteren Sollwert aufzugeben, der analog zur jeweiligen Querposition 53 besteht. Hiermit ist praktisch die Eintauchtiefe gemeint, welche von den Spitzen der Zahnstempel 27a,27b in das Bandmaterial 2 realisiert wird.

Da die Eintauchtiefe - synonym die Querposition 53 - und die Geometrie der Stanzstempel 27a,27b über die Schrittlänge der jeweiligen Vortriebsschritte miteinander in funktionalem Zusammenhang stehen, ist diese Größe ebenfalls der Steuereinrichtung 21 aufzugeben.

Gemäß Fig.1 bis 6 sind jeweils 2 Stanzstempel 27a,27b an einer einzigen Stanzmatrize angeordnet. Wie Fig.1 und 2 zeigen, kann der Stanzstempelabstand 49 einstellbar sein. Hierzu sind exemplarisch Langlöcher 50,51 vorgesehen, die in den Zahnschlitten 24 eingelassen sind. Zur Befestigung der Stanzstempel 27a,27b dienen Hammerschrauben 52, welche die Langlöcher 50 hintergreifen.

Darüber hinaus zeigt Fig.2, daß der Zahnschlitten 24 über einen Querantrieb 54 quer zum Bandmaterial 2 verfahrbar ist. Es ist demnach die Querposition 53 über eine Querbewegung 55, welche dem Zahnschlitten 24 vom Querantrieb 54 aufgeprägt wird, variierbar.

Die Variation der Querposition kann von Stanzvorgang zu Stanzvorgang erfolgen. In diesem Falle würde für jede folgende Hubbewegung eine unterschiedliche Querposition anzufahren sein.

Die unterschiedlichen Querpositionen können allerdings auch nach anderen Gesetzmäßigkeiten angefahren werden.

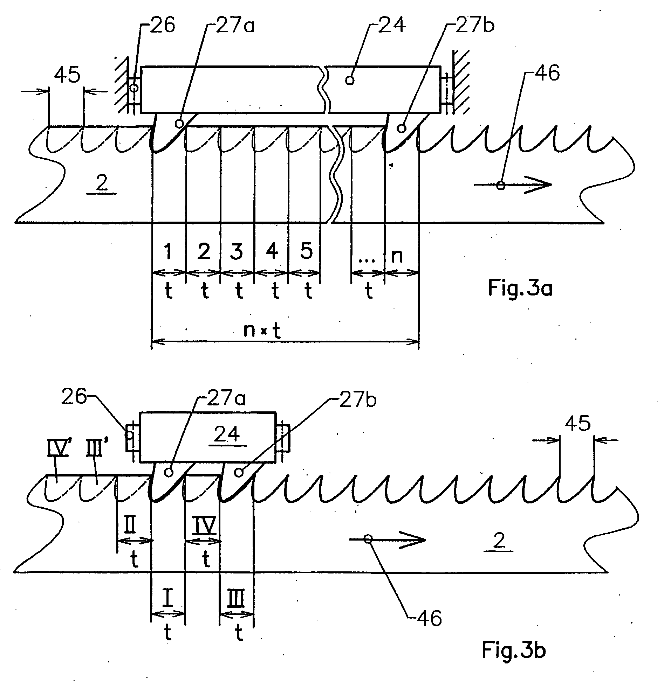

Anhand von Fig.3a soll das allgemeine Prinzip der Erfindung noch einmal verdeutlicht werden.

In diesem Fall haben die Stanzstempel 27a und 27b einen Abstand voneinander, welcher dem n-fachen der Teilung entspricht. Die Teilung t ist hier die Länge der Strecke zwischen zwei aufeinander folgenden Zähnen, die mit 45 bezeichnet ist. Das in Förderrichtung 46 vorausgehende Stanzwerkzeug 27b hat demnach einen Abstand von dem in Förderrichtung nacheilenden Stanzwerkzeug 27a von n-1 mal Teilung. Aus diesem Grunde muß das Bandmaterial 2 insgesamt n-1 Vortriebsschritte erfahren, von denen jeder Vortriebsschritt die Schrittlänge der Teilung t aufweist. Ist dann das in Bandförderrichtung 46 vorauslaufende Stanzwerkzeug 27b an derjenigen Stelle angelangt, wo in der gezeigten Darstellung die Vorderkante des in Bandförderrichtung nacheilenden Stanzwerkzeugs 27a liegt, muß das Bandmaterial 2 um insgesamt n+1 mal der Schrittlänge der Teilung vorangefördert werden, damit das in Bandförderrichtung vorn liegende Stanzwerkzeug 27b wieder mit einem neuen Arbeitszyklus beginnen kann. Werden kürzere Vortriebsschritte ausgeführt, so kann erreicht werden, daß die Zahnspitzen der dazwischen liegenden Zähne zurückspringen, weil jeweils von dem eintauchenden Zahnstempel gekappt.

In Fig.3b ist ein Fall für die spezielle Ausbildung gezeigt, in welcher die Stanzstempel 27a,27b den Abstand des Zweifachen der Teilung haben.

Wie hierzu näher aufgeführt ist, werden mit einem Stanzvorgang die Zahnzwischenräume I und III zugleich hergestellt. Hierauf muß ein kurzer Vortriebsschritt erfolgen, dessen Schrittlänge die Teilung 45 ist. Dann würden die jetzt mit II und IV bezeichneten Stellen unter den Stanzstempeln 27a,27b liegen und im nächsten Stanzvorgang herausgestanzt.

Hernach müßte die jetzt mit III' bezeichnete Stelle unter den vorauslaufenden Stanzstempel 27b verbracht werden, wo sich der Vorgang wiederholt.

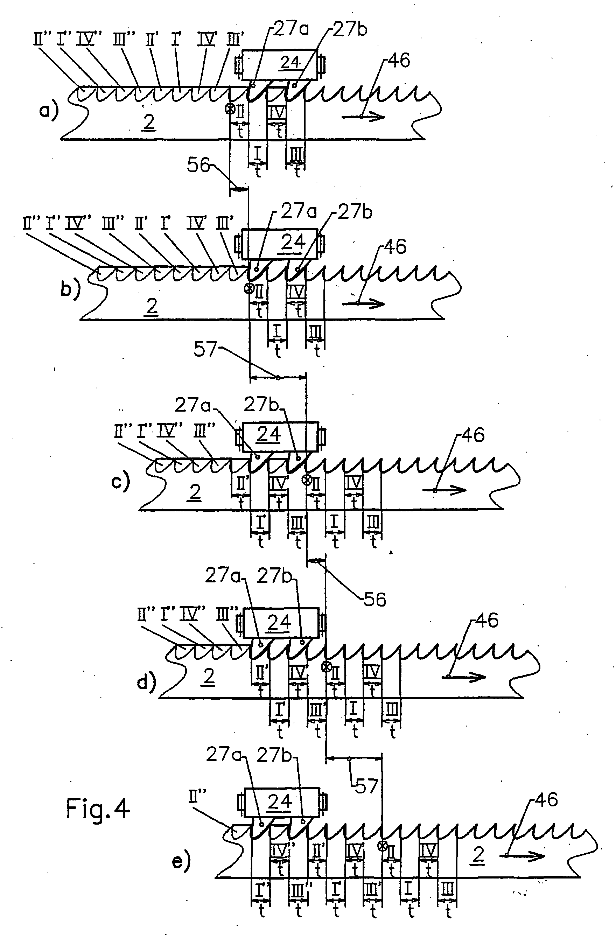

Dieser Fall ist in Fig.4a bis e erneut dargestellt. Die Fig.4a und b entsprechen dem zu Fig.3b Gesagten.

Zwischen den Fig.4a und 4b ist ein Vortriebsschritt 56 erfolgt, dessen Schrittlänge der Teilungslänge 45 entspricht. Danach erfolgt ein Überholschritt 57, um den Beginn des noch nicht gestanzten Bandmaterials unter den vorauslaufenden Stanzstempel 27b zu bringen.

Nachdem die Ausnehmungen I' und III' erstellt worden sind, muß erneut ein Vortriebsschritt 56 kurzer Länge erfolgen um die Ausnehmungen II' und IV' herzustellen.

Danach muß wieder ein Überholschritt 57 ausgeführt werden, um das nächste Paar von Ausnehmungen herzustellen.

Wie bereits anhand von Fig.2 erläutert, kann ein Querantrieb 54 vorgesehen sein, mit welchem die Relativposition in Querrichtung zwischen Bandmaterial und Stanzstempel motorisch-getrieblich verändert werden kann.

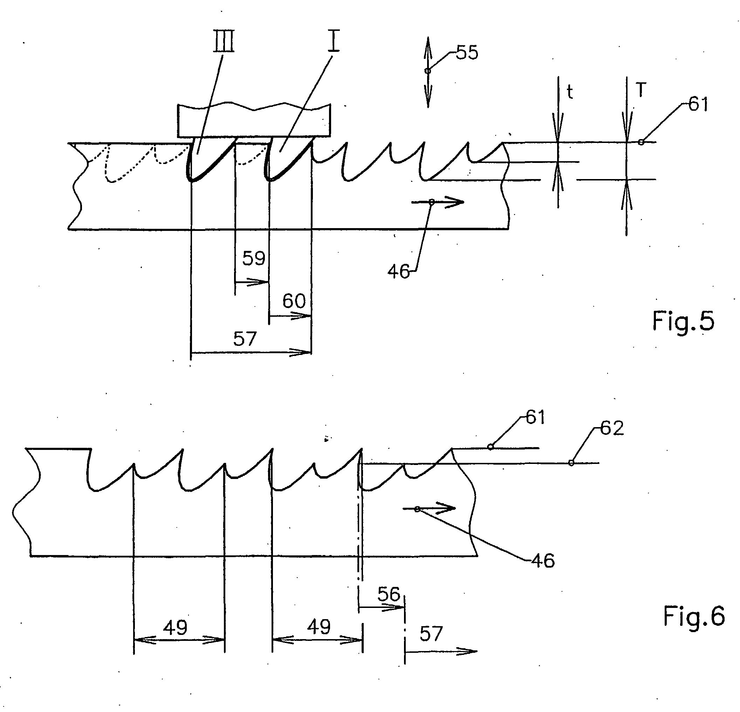

Wie anhand von Fig.5 ersichtlich, ruft eine Veränderung der Querposition zwischen Stanzstempeln und Bandmaterial unterschiedlich tiefe Ausnehmungen aus dem Bandmaterial hervor.

Es entstehen daher im Falle von Bandsägeblättern Zahnungen unterschiedlicher Zahntiefen. Dies kann Sinn machen bei sogenannten Gruppenverzahnungen.

Da infolge der unterschiedlichen Eintauchtiefe jedoch trotzdem für exakt spitze Ausbildung der Zahnspitze zu sorgen ist, müssen die Vortriebsschritte unterschiedlich lang sein bzw. so angepaßt werden, daß ausgeprägte scharfe Zahnspitzen entstehen.

Für die Herstellung der Ausnehmungen I und III wird das Bandmaterial in Ruhe gehalten. Danach erfolgt ein Vortriebsschritt der Länge 59, der hier als kurzer Vortriebsschritt bezeichnet wird.

Die Länge des Vortriebsschritts bemißt sich an dem Abstand, den die Zahnspitzen mit dem nicht so tiefen Zahnzwischenraum t voneinander einnehmen. Die Tiefe des Zahnzwischenraumes wird durch die Querposition 55 des Zahnschlittens 24 eingestellt.

Hierzu werden die Spitzen der Stanzwerkzeuge 27a,27b ein Stück aus dem Bandmaterial 2 herausgefahren, soweit, daß der Zahnzwischenraum in der erforderlichen Tiefe t ausgenommen wird.

Anschließend muß wieder ein Vortriebsschritt größerer Länge erfolgen, damit erneut ein Zahnzwischenraum großer Tiefe T entsteht.

Hierzu setzt der Überholschritt 57 ein, dessen Länge der Summe aus kurzem Zahnabstand 59 und langem Zahnabstand 60 sowie einem zusätzlich langen Zahnabstand 60 entspricht, womit insgesamt 3-mal (=n+1) eine zugehörige Zahnbreite überfahren wird.

In der Zwischenzeit wird der Zahnschlitten 24 erneut um das Maß T-t in das Bandmaterial 2 hineingefahren, so daß erneut ein Zahnzwischenraum von großer Tiefe T herausgestanzt werden kann.

Bei diesem Verfahren entstehen Zähne, deren Zahnspitzen alle auf übereinstimmender Zahnspitzenlinie 61 liegen.

Hiervon unterscheidet sich das Verfahren gemäß Fig.6. In diesem Fall wird das Bandmaterial in jeweils gleichen kleinen Vortriebsschritten 56 gefolgt von einem Überholschritt 57 gefördert. Dabei kann zusätzlich die Querposition der Stanzstempel geändert werden.

In jedem Fall liegen die Zahnspitzenlinien 61,62 auf unterschiedlichen Niveaus. Bei jeweils tief eingefahrenem Stanzwerkzeug 27a,27b bzw. bei den kurzen Vortriebsschritten entstehen zurückverlagerte Zahnspitzen 62. Bei jeweils ausgefahrenem Stanzwerkzeug 27a,27b bzw. bei den langen Vortriebsschritten entstehen Zahnspitzen, die auf der äußeren Zahnspitzenlinie 61 liegen.

Zur Automatisierung dieses Vorgangs kann es deshalb Sinn machen, daß die Schrittlängen der Vortriebsschritte in Abhängigkeit von den unterschiedlichen Querpositionen (T,t) der Ausnehmungen variierbar sind. Im Falle der Fig.6 ist die Schrittlänge aller Vortriebsschritte unabhängig von den unterschiedlichen Querpositionen (T,t) der Ausnehmungen.

Ist der Zahnstempelabstand 49 - wie in den Fig.5 und 6 -, das Zweifache der Teilung, wird zwischen jeweils zwei Querpositionen T,t lediglich im Falle der Fig.5 zwischen einem langen und einem kurzen Vortriebsschritt gewechselt.

Darauf folgt ein Überholschritt, der so bemessen ist, daß der Anfang noch nicht gestanzten Bandes unter den in Förderrichtung 46 vorauslaufenden Stanzstempel zu liegen kommt.

Insbesondere um Zahnzwischenräume unterschiedlicher Querpositionen T,t herzustellen, soll der Querantrieb 54 entsprechend getaktet sein.

Hierzu dient eine Verbindungsleitung von der zentralen Steuereinrichtung 21 an den Motor des Querantriebs 54, der seinerseits getrieblich mit einem quer zum Bandmaterial 2 verfahrbaren Schlitten gekoppelt ist.

Wesentlich für die Erfindung ist die zeitliche Taktung zwischen den Vortriebsschritten und den dazwischen liegenden Vortriebsruhezeiten. In den Vortriebsruhezeiten erfolgt die Hubbewegung 58 des Stanzschlittens 24. Vorher bzw. nachher wird gegebenenfalls die jeweilige Querposition des Stanzschlittens 24 vom Querantrieb 54 eingestellt.

Um die Steuerung zeitlich zu koordinieren, dient der Geber 31, der nach jeweils einer Drehbewegung den Nehmer 32 so aktiviert, daß der Steuereinrichtung 21 ein entsprechendes Signal aufgeprägt werden kann.

Die Stanzstempel können auch einstückig miteinander verbunden sein und so einen unveränderbaren Stanzstempelabstand aufweisen.

### Bezugszeichenaufstellung:

- 100: Stanzmaschine
- 2: Bandmaterial
- 3: Abwickelspule
- 4: Aufwickelspule
- 5: Aufwickelantrieb
- 6: Abwickelantrieb
- 7: vorauslaufende Verschlappungszone
- 8: nachlaufende Verschlappungszone
- 9: Bandfördereinrichtung
- 10: eingangsseitiges Förderrollenpaar
- 11: ausgangsseitiges Förderrollenpaar
- 12: Zugmittelantrieb für 10
- 13: Zugmittelantrieb für 11
- 14: Stanzmatrize
- 15: Bandwegmeßeinrichtung
- 16: Meßrad
- 17: Breitseite
- 18: gegenüberliegende Breitseite
- 19: Anpreßrolle
- 20: Wegsignalleitung
- 21: Steuereinrichtung
- 22: Bandfördermötor
- 23: Servoverstärker
- 24: Zahnschlitten
- 25: Maschinengehäuse
- 26: Wälzlagerführung
- 27a: Stanzstempel
- 27b: Stanzstempel
- 28: Gegenplatte
- 29: Zahnschlittenexenter
- 30: Stanzmotor
- 31: Geber
- 32: Nehmer
- 33: Basisplatte
- 34: Bandrückenanschlag
- 35: Wälzlager.
- 36: Wälzlager
- 37: Verstellrichtung
- 38: Verstellspindel
- 39: Verstellrad
- 40: Spindellagerung
- 41: Spindelgewinde
- 42: Längsführung
- 43: Drehachse der Förderrolle
- 44: Neigungswinkel
- 45: Teilung
- 46: Förderrichtung
- 47: Förderkraft
- 48: Anpreßkraft
- 49: Stanzstempelabstand
- 50: Langloch
- 51: Langloch
- 52: Hammerschraube
- 53: Querposition
- 54: Querantrieb
- 55: Querbewegung
- 56: Vortriebsschritt mit Teilungslänge
- 57: Überholschritt
- 58: Hubbewegung des Zahnschlittens
- 59: Zahnspitzenabstand, kurz
- 60: Zahnspitzenabstand, lang
- 61: Zahnspitzenlinie, außenliegende
- 62: Zahnspitzenlinie, innenliegende
- T, t: Tiefe des jeweiligen Zahnzwischenraums
- I - IV: Zahnzwischenraum eines Überholschritts
- I' - IV': Zahnzwischenraum des nächsten Überholschritts
- I" - IV'': Zahnzwischenraum des übernächsten Überholschritts

## Patentansprüche

1. Vorrichtung zur Herstellung von Bandsägeblättern durch Ausstanzen einzelner angeschärfter Sägezähne vorgegebener Breite mit vorbestimmten und sich jeweils wiederholenden Abständen voneinander aus einem metallischen Bandmaterial (2), welches mittels Bandfördereinrichtung (9) diskontinuierlich in Vortriebsschritten von vorgegebenen und von der Teilung (45) abhängenden Längen gefördert und ausschließlich in den Vortriebsruhezeiten mittels Stanzstempel einer zum Bandmaterial (2) querbeweglichen und getaktet angetriebenen Stanzmatrize (14) mit angeschärften Sägezähnen versehen wird wobei das Anschärfen durch den Stanzschritt für den folgenden Zahn geschieht, **dadurch gekennzeichnet, daß**
1.0 zwei Stanzstempel (27a,27b) an der Stanzmatrize vorgesehen sind, welche parallel zu den Längskanten des Bandmaterials (2) liegen und welche
1.1 voneinander den Abstand (49) eines ganzzahligen Vielfachen (n≥2) der Teilung (45) haben, und daß
1.2 die Bandfördereinrichtung (9) nach einer Anzahl von (n-1) kleinen Vortriebsschritten, von denen jeder die Schrittlänge der Teilung (45) hat,
1.2.1 einen Überholschritt ausführt, dessen Schrittlänge gleich ist dem (n+1)-fachen der Teilung (45).

2. Vorrichtung nach Anspruch 1, **dadurch gekennzeichnet, daß** die zwei Stanzstempel (27a,27b) an einer einzigen Stanzmatrize (14) sitzen.

3. Vorrichtung nach Anspruch 2, **dadurch gekennzeichnet, daß** die zwei Stanzstempel (27a,27b) einstückig miteinander verbunden sind.

4. Vorrichtung nach Anspruch 2, **dadurch gekennzeichnet, daß** der Stanzstempelabstand (49) einstellbar ist.

5. Vorrichtung nach einem der Ansprüche 1 bis 4, **dadurch gekennzeichnet, daß** Stanzstempel (27a,27b) und Bandmaterial (2) zur Erzielung unterschiedlicher Querpositionen (53) der Ausnehmungen relativ zueinander quer, vorzugsweise senkrecht zu den Längskanten des Bandmaterials (2) verfahrbar sind.

6. Vorrichtung nach Anspruch 5, **dadurch gekennzeichnet, daß** die Schrittlänge (45) der Vortriebsschritte in Abhängigkeit von den unterschiedlichen Querpositionen (T, t) der Ausnehmungen variierbar ist.

7. Vorrichtung nach Anspruch 5, **dadurch gekennzeichnet, daß** die Schrittlänge (45) der Vortriebsschritte unabhängig von den unterschiedlichen Querpositionen (T,t) der Ausnehmungen konstant bleibt.

8. Vorrichtung nach Anspruch 6, **dadurch gekennzeichnet, daß** der Stanzstempelabstand (49) das Zweifache der Teilung (45) ist und daß zwischen zwei Querpositionen (T,t) und zwischen einem langen (60) und einem kurzen (59) Vortriebsschritt jeweils gewechselt wird, worauf ein Überholschritt (57) durchgeführt wird.

9. Vorrichtung nach einem der Ansprüche 1 bis 8, **dadurch gekennzeichnet, daß** die Schrittlänge der Vortriebsschritte so variiert wird, daß ohne Veränderung der Querposition der Stanzwerkzeuge die entstehenden Zahnspitzen auf unterschiedlichen Zahnspitzenlinien (61, 62) liegen.

## Claims

1. Apparatus for producing endless saw blades by punching out individual, scarfed saw teeth, which are of a predetermined width and are disposed in each case at repeating intervals from each other, from a metal sheet material (2), which material is advanced by means of a sheet conveying device (9) intermittently in forward steps of predetermined lengths which depend upon the division (45) and is provided with scarfed saw teeth exclusively in the forwards movement idle times by means of a stamping punch of a punch die (14) which is driven in cycles and moves transversely with respect to the sheet material (2), wherein the scarfing is achieved by virtue of the step of punching out the following tooth, **characterised in that**
1.0 two stamping punches (27a, 27b) which are provided on the punch die lie in parallel with the longitudinal edges of the sheet material (2) and
1.1 have a spaced disposition (49) with respect to each other which is an integral multiple (n≥2) of the division (45), and that
1.2 the sheet conveying device (9) after performing a number (n-1) of small forward steps, of which each is equal to the step length of the division (45),
1.2.1 performs an overtaking step, the step length of which is equal to (n+1) times the division (45).

2. Apparatus according to claim 1, **characterised in that** the two stamping punches (27a, 27b) sit on a single punch die (14).

3. Apparatus according to claim 2, **characterised in that** the two stamping punches (27a, 27b) are connected to each other to form one piece.

4. Apparatus according to claim 2, **characterised in that** the spacing (49) between the stamping punches can be adjusted.

5. Apparatus according to any one of claims 1 to 4, **characterised in that** the stamping punches (27a, 27b) and sheet material (2) can be moved, for the purpose of achieving different transverse positions (53) of the cutouts, in a transverse manner relative to each other, preferably perpendicularly with respect to the longitudinal edges of the sheet material (2).

6. Apparatus according to claim 5, **characterised in that** the step length (45) of the forward steps can be varied in dependence upon the different transverse positions (T, t) of the cutouts.

7. Apparatus according to claim 5, **characterised in that** the step length (45) of the forward steps remains constant irrespective of the different transverse positions (T, t) of the cutouts.

8. Apparatus according to claim 6, **characterised in that** the stamping punch spacing (49) is twice the length of the division (45) and that a change is made in each case between two transverse positions (T, t) and between a long (60) and a short (59) forward step, following which an overtaking step (57) is performed.

9. Apparatus according to any one of claims 1 to 8, **characterised in that** the step length of the forward step is varied such that without changing the transverse position of the punching tool the tooth peaks produced lie on different tooth peak lines (61, 62).

## Revendications

1. Dispositif pour fabriquer des lames de scie à ruban par découpage de dents de scie affûtées individuelles d'une largeur prédéfinie et suivant des intervalles prédéfinis et qui se répètent, dans un matériau métallique en bande (2) qui est transporté de manière discontinue et suivant des pas d'avance de longueurs prédéfinies et dépendant de l'écart (45) des dents à l'aide d'un dispositif transporteur de bande (9), et qui n'est pourvu de dents de scie affûtées que lors des temps de repos de l'avance, grâce au poinçon de découpage d'une matrice de découpage (14) mobile transversalement par rapport au matériau en bande (2) et entraînée de manière cadencée, **caractérisé**
1.0 en ce qu'il est prévu sur la matrice de découpage deux poinçons de découpage (27a, 27b) qui sont parallèles aux bords longitudinaux du matériau en bande (2) et qui
1.1 présentent entre eux un écartement (49) égal à un multiple entier (n≥2) de l'écart (45), et en ce que
1.2 le dispositif de transport de bande (9), suivant un nombre (n-1) de petits pas d'avance qui présentent chacun une longueur égale à l'écart (45),
1.3 décrit un pas de retouche dont la longueur est égale à (n+1) fois l'écart (45).

2. Dispositif selon la revendication 1, **caractérisé en ce que** les deux poinçons de découpage (27a, 27b) se trouvent sur une matrice de découpage unique (14).

3. Dispositif selon la revendication 2, **caractérisé en ce que** les deux poinçons de découpage (27a, 27b) sont reliés d'une seule pièce.

4. Dispositif selon la revendication 2, **caractérisé en ce que** l'écartement (49) entre les poinçons de découpage est réglable.

5. Dispositif selon l'une des revendications 1 à 4, **caractérisé en ce que** pour qu'on obtienne des positions transversales (53) différentes des évidements les uns par rapport aux autres, les poinçons de découpage (27a, 27b) et le matériau en bande (2) sont mobiles transversalement, de préférence perpendiculairement aux bords longitudinaux du matériau en bande (2).

6. Dispositif selon la revendication 5, **caractérisé en ce que** la longueur (45) des pas d'avance est variable en fonction des différentes positions transversales (T, t) des évidements.

7. Dispositif selon la revendication 5, **caractérisé en ce que** la longueur (45) des pas d'avance reste constante quelles que soient les différentes positions transversales (T, t) des évidements.

8. Dispositif selon la revendication 6, **caractérisé en ce que** l'écartement (49) des poinçons de découpage est deux fois plus grand que l'écart (45), et **en ce qu'**on alterne deux positions transversales (T, t), et un pas d'avance long (60) et un pas d'avance court (59), après quoi un pas de retouche (57) est exécuté.

9. Dispositif selon l'une des revendications 1 à 8, **caractérisé en ce que** la longueur des pas d'avance varie de telle sorte que sans modification de la position transversale des outils de découpage, les pointes de dents obtenues sont situées sur des lignes de pointes de dents (61, 62) différentes.
